# EUROPÄISCHE PATENTSCHRIFT

(11) **EP 0 815 623 B1**
(45) Veröffentlichungstag und Bekanntmachung des Hinweises auf die Patenterteilung: **25.11.1998**
(21) Anmeldenummer: 96906724.8
(22) Anmeldetag: 01.03.1996
(51) Int. Cl.: H02B 1/01, H05K 7/18

(54) **SCHALTSCHRANK MIT RAHMENGESTELL UND SOCKEL**
SWITCHGEAR CABINET WITH FRAMEWORK AND BASE
ARMOIRE DE DISTRIBUTION AVEC SOCLE ET CHASSIS

(30) Priorität: 07.03.1995 DE 19507728
(43) Veröffentlichungstag der Anmeldung: 07.01.1998
(73) Patentinhaber: Rittal-Werk Rudolf Loh GmbH & Co. KG, 35745 Herborn (DE)
(72) Erfinder: NICOLAI, Walter, D-35418 Buseck (DE)
(74) Vertreter: Fleck, Hermann-Josef, Dr.-Ing.
(86) Internationale Anmeldenummer: EP9600870
(87) Internationale Veröffentlichungsnummer: WO9627930

(56) Entgegenhaltungen:
- WO-A-91/00221
- US-A- 4 766 708
- US-A- 5 289 348

## Beschreibung

Die Erfindung betrifft einen Schaltschrank mit einem auf einem rahmenartigen Sockel befestigten Rahmengestell, das aus Rahmenschenkeln zusammengesetzt und mittels Wandelementen und mindestens einer Schranktür verschlossen oder verschließbar ist.

Die US-A- 4 766 708 offenbart einen derartigen Schaltschrank.

Bei den bekannten Schaltschränken dieser Art ist der Sockel und das Rahmengestell fest miteinander verbunden und bildet mit den am Rahmengestell angebrachten Wandelementen eine starre Einheit, in der wiederum die Einbauten fest installiert sind. Wird ein derartiger Schaltschrank in einem Erdbebengebiet eingesetzt, dann besteht die Gefahr, daß durch den festen, starren Aufbau große Beschädigungen auftreten können, die zum totalen Ausfall der Funktionen führen.

Es ist Aufgabe der Erfindung, einen Schaltschrank der eingangs erwähnten Art zu schaffen, der den bei Erdbeben auftretenden Kräften standhält und möglichst funktionsfähig bleibt, wobei einfache Teile verwendbar sind, die auch bei Standardschränken nachrüstbar sind.

Diese Aufgabe wird nach der Erfindung dadurch gelöst, daß der untere Rahmen des Rahmengestelles mit den Unterseiten seiner Rahmenschenkel über einen plattenförmigen Dämpfungsrahmen mit der Oberseite des fest mit der Standfläche verbindbaren Sockels verbunden ist.

Der fest mit der Standfläche verbundene Sockel läßt über den Dämpfungsrahmen eine allseitige, begrenzte Verstellung des Rahmengestelles zu, so daß die von einem Erdbeben über den Sockel übertragenen Kräfte von dem Dämpfungsrahmen aufgenommen werden. Das Rahmengestell kann sich als Einheit gegenüber dem Sockel verstellen, so daß Beschädigungen wesentlich reduziert sind, wenn nicht gar vermieden sind. Bei einem Standardschrank kann nach Abnahme des Sockels der Dämpfungsrahmen leicht nachgerüstet werden.

Nach einer Ausgestaltung ist vorgesehen, daß die Oberseite des Sockels U-förmige Schienen in Rahmenform trägt, die eine nach oben offene Aufnahme für den plattenförmigen Dämpfungsrahmen bilden, damit auch seitlich wirkende Schub- und Zugkräfte von dem Dämpfungsrahmen aufgenommen werden.

Ein unbeabsichtigtes Lösen des Rahmengestelles vom Sockel wird dadurch unterbunden, daß das Rahmengestell und der Sockel in den Eckbereichen durch den Dämpfungsrahmen hindurch mittels Schrauben lose miteinander verbunden sind.

Ist nach einer weiteren Ausgestaltung vorgesehen, daß neben dem unteren Rahmen des Rahmengestelles, der Innenseite des Schaltschrankraumes zugekehrt, auf dem plattenförmigen Dämpfungsrahmen ein Führungsrahmen mit Führungsstegen für eine mit Führungsklötzchen versehene Montageplatte befestigt ist, und daß die Montageplatte im oberen Bereich über Dämpfungsklötzchen an mit dem Rahmengestell verbundenen Befestigungselementen angebracht ist, dann wird auch die Montageplatte mit den darauf befestigten Geräten und dgl. allseitig federnd in dem Rahmengestell untergebracht. Der Führungsrahmen steht dabei mit dem Schaltschrank nicht in Verbindung und ist allseitig durch den Dämpfungsrahmen federnd befestigt. Anstelle des Führungsrahmens können auch nur Führungsschienen verwendet werden.

Die Sicherheit kann dadurch noch erhöht werden, daß das Rahmengestell im Bereich seines oberen Rahmens über Federelemente an einer an einer Wand oder einer Decke befestigbaren Halteschiene oder an einem Halterahmen federnd aufgehängt ist.

Eine weitere Ausgestaltung sieht vor, daß der Dämpfungsrahmen einen vertikalen Steg aufweist, der den Zwischenraum zwischen den Rahmenschenkeln des unteren Rahmens des Rahmengestells und dem Führungsrahmen ausfüllt.

Die Erfindung wird anhand eines in den Zeichnungen dargestellten Ausführungsbeispiels näher erläutert. Es zeigen:
- Fig. 1: den Grundaufbau eines Schaltschrankes mit Sockel, Dämpfungsrahmen, Rahmengestell und Montageplatte,
- Fig. 2: in Einzelheiten eine Verbindung zwischen Sockel, Dämpfungsrahmen, Führungsrahmen und Rahmengestell,
- Fig. 3: die Verbindung des oberen Bereiches einer Montageplatte mit dem Rahmengestell und
- Fig. 4: eine zusätzliche federnde Festlegung des oberen Bereiches des Rahmengestelles an einer Wand.

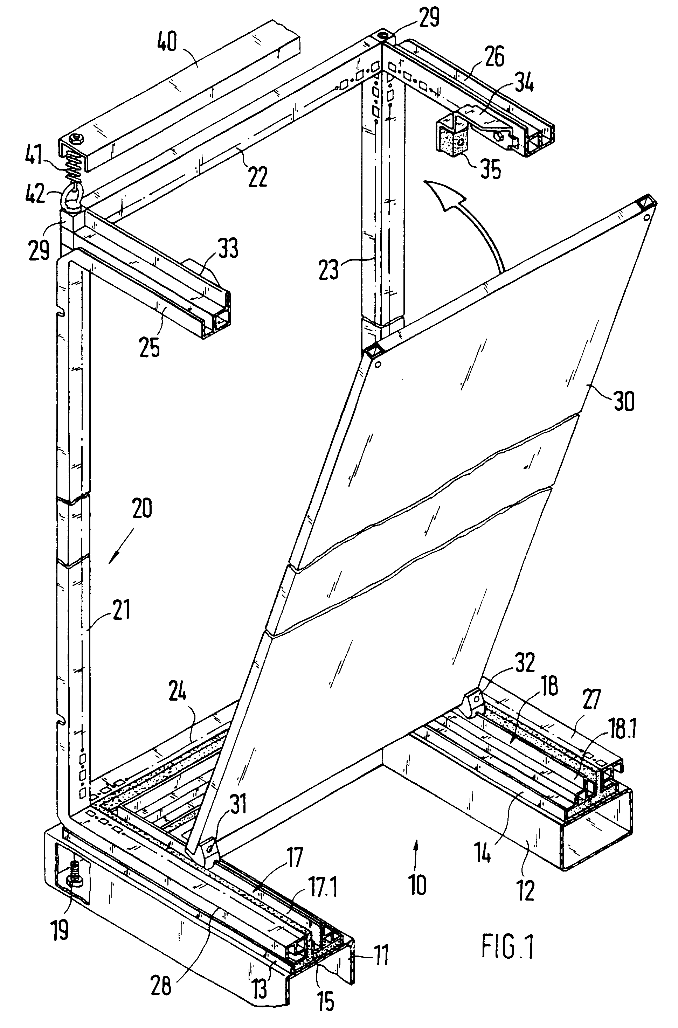

Von dem rahmenartigen Sockel 10 sind in Fig. 1 die seitlichen Schenkel 11 und 12 erkennbar, die im Ausführungsbeispiel als Vierkanthohlprofilabschnitt ausgebildet sind und in bekannter Weise mit der Standfläche befestigt, z.B. verschraubt werden können. Von dem Rahmengestell 20 ist der untere und der obere Rahmen nur teilweise dargestellt. Die Rahmenschenkel 21, 22, 23 und 24 bilden den hinteren Rahmen des Rahmengestelles 20, wobei zum Zusammenbau des Rahmengestelles 20 an den Ecken auch Eckverbinder 29 verwendet werden können.

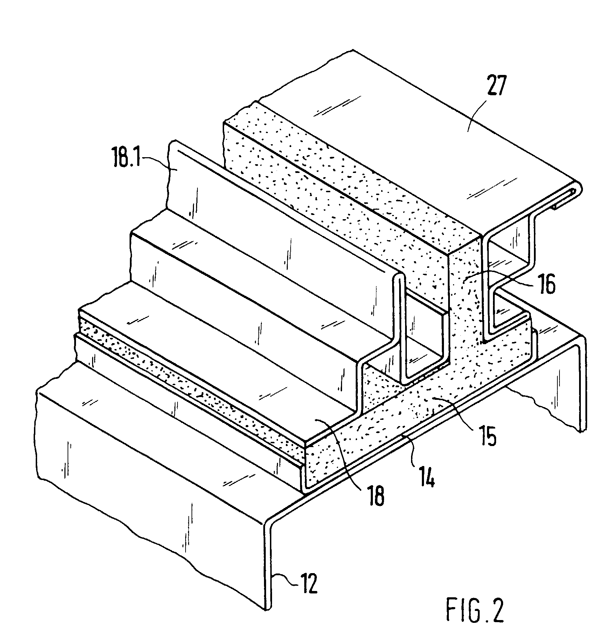

Der untere Rahmen wird mit den Unterseiten seiner Rahmenschenkel 24, 27, 28 mit der Obersite des Sockels 10 über einen plattenförmigen Dämpfungsrahmen 15 verbunden. Dabei ist dieser Dämpfungsrahmen 15 seitlich durch einen U-förmigen Halterahmen gehalten, von dem die seitlichen Schenkel mit 13 und 14 bezeichnet sind, wie die Fig. 2 deutlich erkennen läßt. Am oberen hinteren Rahmenschenkel 22 zweigen die als Tiefenstreben verwendeten Rahmenschenkel 25 und 26 ab, die mit den unteren, als Tiefenstreben dienenden Rahmenschenkel 27 und 28 zum vorderen, nicht dargestellten Rahmen des Rahmengestelles 20 führen.

Wie die Schraube 19 im Eckbereich des Sockels 10 zeigt, wird durch den Dämpfungsrahmen 15 hindurch der Sockel 10 in den Eckbereichen lose mit dem Rahmengestell 20 verschraubt, um die Bewegung der beiden Teile voneinander weg zu begrenzen und ein unbeabsichtigtes Lösen zu verhindern. Innerhalb des unteren Rahmens des Rahmengestelles 20 ist ein Führungsrahmen für eine Montageplatte 30 auf den Dämpfungsrahmen 15 befestigt. Dieser trägt einen vertikalen Steg 16, der den Zwischenraum zwischen dem unteren Rahmen des Rahmengestelles 20 und dem Führungsrahmen ausfüllt. Von dem Führungsrahmen sind die seitlichen Schenkel 17 und 18 bezeichnet, die vertikal nach oben gerichtete, doppellagige Führungsstege 17.1 und 18.1 bilden. Auf diesen Führungsstegen 17.1 und 18.1 kann die unten mit Führungsklötzchen 31 und 32 versehene Montageplatte 30 in den Schaltschrank eingeschoben werden.

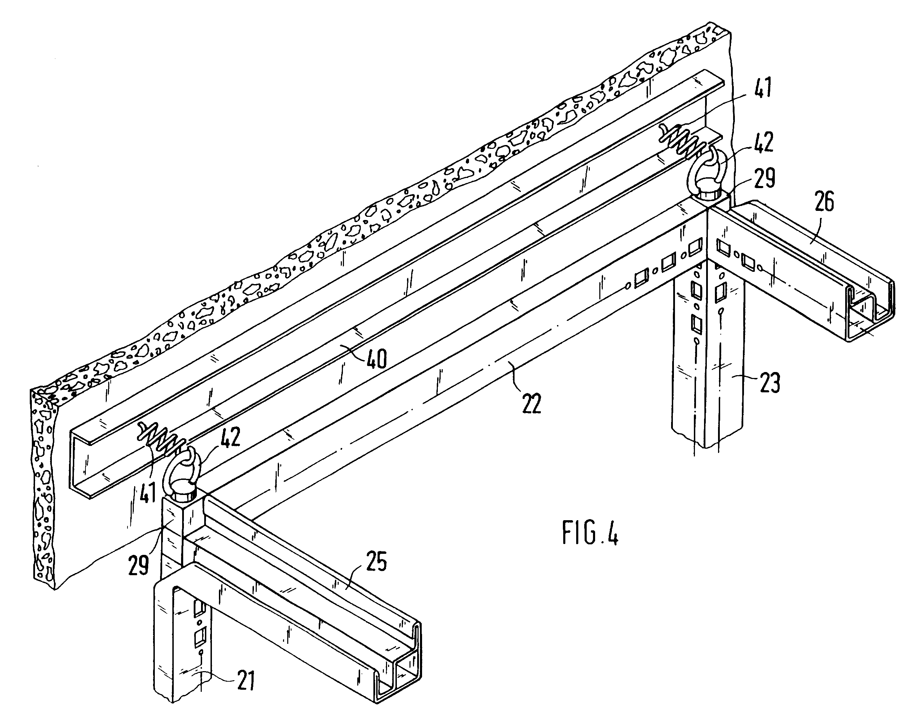

Der obere Bereich der Montageplatte 30 wird über Dämpfungsklötzchen 35 an Befestigungselementen 33 und 34 befestigt, die an den als Tiefenstreben verwendeten, oberen Rahmenschenkel 25 und 26 angebracht sind. Damit ist auch die Montageplatte 30 mit den darauf befestigten Geräten und dgl. als Ganzes allseitig begrenzt im Rahmengestell 20 verstellbar, so daß die Kräfte noch besser aufgefangen werden. Der obere Bereich des Rahmengestelles 20 kann über Federelemente 41 an Halteschienen 40 oder an einem Halterahmen aufgehängt werden, die oder der an der Decke befestigt ist. Dabei werden Schraubhaken 42 in die mit Gewindeaufnahme versehenen Eckverbinder 29 eingschraubt, wie der Fig. 1 zu entnehmen ist. Wie Fig. 4 zeigt, kann der obere Bereich des Rahmengestelles 20 auch federnd an einer oder mehreren Wänden befestigt werden, wobei die Federelemente 41 horizontal wirken. Diese Federelemente 41 sind vorzugsweise als Schraubenfedern ausgebildet, die sowohl Zug-, als auch Druckkräfte abfangen können.

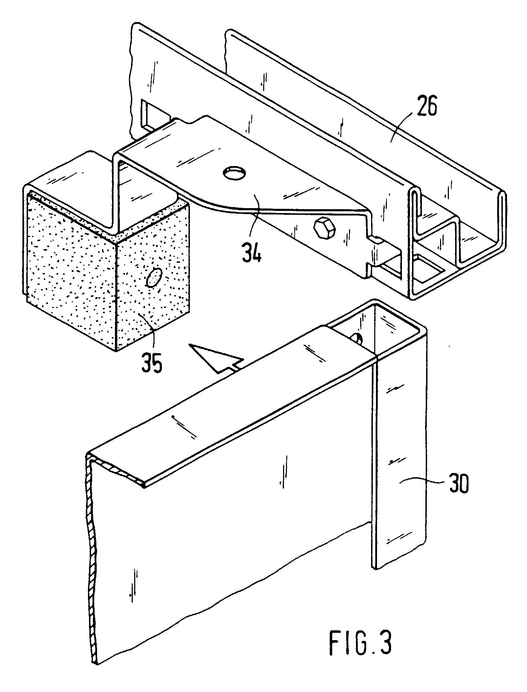

In Fig. 3 ist eine obere Verbindung zwischen der Montageplatte 30 und einem als Tiefenstrebe verwendeten Rahmenschenkel 26 des Rahmengestelles 20 gezeigt. Das Befestigungselement 34 wird an dem Rahmenschenkel 26 festgeschraubt und bietet über ein Dämpfungsklötzchen 35 eine Anbringungsmöglichkeit für die Montageplatte 30, welche ein allseitiges, gedämpftes Spiel bringt.

Es ist leicht einzusehen, daß der Dämpfungsrahmen 15 und die Dämpfungsklötzchen 35 auch nachträglich zur Nachrüstung des Schaltschrankes verwendbar sind, da das Rahmengestell 20 nach wie vor eine Einheit bildet und nur von dem Sockel gelöst werden muß.

## Patentansprüche

1. Schaltschrank mit einem auf einem rahmenartigen Sockel (10) befestigten Rahmengestell (20), das aus Rahmenschenkeln (21-28) zusammengesetzt und mittels Wandelementen und mindestens einer Schranktür verschlossen oder verschließbar ist,
dadurch gekennzeichnet,
daß der untere Rahmen des Rahmengestelles (20) mit den Unterseiten seiner Rahmenschenkel (24,27, 28) über einen plattenförmigen Dämpfungsrahmen (15) mit der Oberseite des fest mit der Standfläche verbindbaren Sockels (10) verbunden ist.

2. Schaltschrank nach Anspruch 1,
dadurch gekennzeichnet,
daß die Oberseite des Sockels (10) U-förmige Schienen (13,14) in Rahmenform trägt, die eine nach oben offene Aufnahme für den plattenförmigen Dämpfungsrahmen (15) bilden.

3. Schaltschrank nach Anspruch 1 oder 2,
dadurch gekennzeichnet,
daß das Rahmengestell (20) und der Sockel (10) in den Eckbereichen durch den Dämpfungsrahmen (15) hindurch mittels Schrauben (19) lose miteinander verbunden sind.

4. Schaltschrank nach einem der Ansprüche 1 bis 3,
dadurch gekennzeichnet,
daß neben dem unteren Rahmen des Rahmengestelles (20), der Innenseite des Schaltschrankraumes zugekehrt, auf dem plattenförmigen Dämpfungsrahmen (15) ein Führungsrahmen mit Führungsstegen (17.1, 18.1) für eine mit Führungsklötzchen (31,32) versehene Montageplatte (30) befestigt ist.

5. Schaltschrank nach einem der Ansprüche 1 bis 4,
dadurch gekennzeichnet,
daß das Rahmengestell (20) im Bereich seines oberen Rahmens über Federelemente (41) an einer an einer Wand oder einer Decke befestigbaren Halteschiene (40) oder an einem Halterahmen federnd aufgehängt ist.

6. Schaltschrank nach Anspruch 4,
dadurch gekennzeichnet,
daß die Montageplatte (30) im oberen Bereich über Dämpfungsklötzchen (35) an mit dem Rahmengestell (20) verbundenen Befestigungselementen (33,34) angebracht ist.

7. Schaltschrank nach einem der Ansprüche 4 bis 6,
dadurch gekennzeichnet,
daß der Dämpfungsrahmen (15) einen vertikalen Steg (16) aufweist, der den Zwischenraum zwischen den Rahmenschenkeln (24,27, 28) des unteren Rahmens des Rahmengestells (20) und dem Führungsrahmen ausfüllt.

8. Schaltschrank nach Anspruch 4,
dadurch gekennzeichnet,
daß anstelle des Führungsrahmens Führungsschienen verwendet sind, die nicht mit dem Schaltschrank oder Sockel (10) in Verbindung stehen.

## Claims

1. Switchgear cabinet, having a framework (20), which is secured on a frame-like base (10) and comprises frame members (21-28), said framework being closed or closable by means of wall elements and at least one cabinet door, characterised in that the lower frame of the framework (20) is connected by the undersides of its frame members (24,27, 28) to the upper surface of the base (10), which is securely connectable to the supporting face, via a flat-shaped damping frame (15).

2. Switchgear cabinet according to claim 1, characterised in that the upper surface of the base (10) is provided with U-shaped rails (13,14) in frame form, which rails form an upwardly open receiver for the flat-shaped damping frame (15).

3. Switchgear cabinet according to claim 1 or 2, characterised in that the framework (20) and the base (10) are loosely interconnected in the corner regions by means of screws (19) through the damping frame (15).

4. Switchgear cabinet according to one of claims 1 to 3, characterised in that a guide frame with guide webs (17.1,18.1) for a mounting plate (30), which is provided with small guide plates (31,32), is secured on the flat-shaped damping frame (15) adjacent the lower frame of the framework (20), facing the inside of the switchgear cabinet chamber.

5. Switchgear cabinet according to one of claims 1 to 4, characterised in that the framework (20) is resiliently mounted on a retaining rail (40), which is securable on a wall or a ceiling, or on a retaining frame in the region of its upper frame via resilient elements (41).

6. Switchgear cabinet according to claim 4, characterised in that the mounting plate (30) is mounted in the upper region, via small damping plates (35), on securing elements (33,34), which are connected to the framework (20).

7. Switchgear cabinet according to one of claims 4 to 6, characterised in that the damping frame (15) has a vertical web (16), which fills the space between the frame members (24,27, 28) of tne lower frame of the framework (20) and the guide frame.

8. Switchgear cabinet according to claim 4, characterised in that guide rails, which do not communicate with the switchgear cabinet or base, are used instead of the guide frame.

## Revendications

1. Armoire de distribution avec un châssis ou une ossature d'encadrement (20) fixée sur un socle en forme de cadre, châssis ou ossature constituée par des ailes d'encadrement (21 à 28) et qui peut être fermé au moyen d'éléments de paroi et d'au moins une porte d'armoire,
caractérisée
en ce que le cadre inférieur de l'ossature (20) est par les faces inférieures de ses ailes d'encadrement (24, 27, 28) et par l'intermédiaire d'un cadre d'amortissement en forme de plaque (15) relié à la face supérieure du socle (10), lequel peut être relié rigidement à la surface de pose.

2. Armoire de distribution suivant la revendication 1,
caractérisée
en ce que la face supérieure du socle (10) porte des rails en forme de U (13, 14) sous forme de cadre, qui constituent un réceptacle ouvert en haut pour le cadre d'amortissement (15) en forme de plaque.

3. Armoire de distribution suivant la revendication 1 ou 2,
caractérisée
en ce que dans les zones des angles, l'ossature d'encadrement (20) et le socle (10) sont reliés avec liberté de mouvement au moyen de vis (19) qui traversent le cadre d'amortissement (15).

4. Armoire de distribution suivant l'une quelconque des revendications de 1 à 3,
caractérisée
en ce qu'à côté du cadre inférieur de l'ossature (20), et face à l'intérieur de l'enceinte de l'armoire de distribution, un cadre de guidage avec des nervures de guidage (17.1, 18.1) pour une plaque de montage (30) munie de tasseaux de guidage (31, 32) est fixé sur le cadre d'amortissement (15) en forme de plaque.

5. Armoire de distribution suivant l'une quelconque des revendications de 1 à 4,
caractérisée
en ce que dans la région de son cadre supérieur, l'ossature d'encadrement (20) est par l'intermédiaire d'éléments à ressort (41) suspendue élastiquement à un rail de support (40) pouvant être fixé à une paroi ou à un plafond, ou suspendue élastiquement à un cadre de support.

6. Armoire de distribution suivant la revendication 4,
caractérisée
en ce que dans la région supérieure, la plaque de montage (30) est par l'intermédiaire de tasseaux d'amortissement (35) fixée à des éléments de fixation (33, 34) reliés à l'ossature d'encadrement (20).

7. Armoire de distribution suivant l'une quelconque des revendications de 4 à 6,
caractérisée
en ce que le cadre d'amortissement (15) présente une nervure verticale (16), qui remplit l'interstice entre les ailes d'encadrement (24, 27, 28) du cadre inférieur de l'ossature (20) et le cadre de guidage.

8. Armoire de distribution suivant la revendication 4,
caractérisée
en ce qu'à la place du cadre de guidage sont utilisés des rails de guidage, qui sont en liaison avec l'armoire de distribution ou avec le socle (10).
